# EUROPÄISCHE PATENTSCHRIFT

(11) **EP 2 398 831 B1**
(45) Veröffentlichungstag und Bekanntmachung des Hinweises auf die Patenterteilung: **29.05.2013**
(21) Anmeldenummer: 10703482.9
(22) Anmeldetag: 15.02.2010
(51) Int. Cl.: C08F 2/00

(54) **WÄSSRIGE POLYMERDISPERSION AUS VINYLAROMATISCHER VERBINDUNG, KONJUGIERTEM ALIPHATISCHEN DIEN UND ETHYLENISCH UNGESÄTTIGTER SÄURE**
AQUEOUS POLYMER DISPERSION MADE OF A VINYLAROMATIC COMPOUND, CONJUGATED ALIPHATIC DIENE, AND ETHYLENICALLY UNSATURATED ACID
DISPERSION AQUEUSE DE POLYMÈRE À BASE D'UN COMPOSÉ VINYLAROMATIQUE, D'UN DIÈNE CONJUGUÉ ALIPHATIQUE ET D'UN ACIDE À INSATURATION ÉTHYLÉNIQUE

(30) Priorität: 19.02.2009 EP 09153187
(43) Veröffentlichungstag der Anmeldung: 28.12.2011
(73) Patentinhaber: BASF SE, 67056 Ludwigshafen (DE)
(72) Erfinder: EVSTATIEVA, Elitsa, 68159 Mannheim (DE); LAWRENZ, Dirk, 67454 Haßloch (DE)
(86) Internationale Anmeldenummer: PCT/EP2010/051833
(87) Internationale Veröffentlichungsnummer: WO 2010/094641

(56) Entgegenhaltungen:
- EP-A1- 0 575 625
- US-A- 5 354 800
- US-A- 5 891 008
- DATABASE WPI Week 200175 Thomson Scientific, London, GB; AN 2001-651308 XP002580188 & JP 2001 248098 A (NIPPON A & L KK) 14. September 2001 (2001-09-14)

## Beschreibung

Die Erfindung betrifft Arylcyclohexen-freie oder Arylcyclohexen-arme wässrige Polymerdispersionen mit einem Gehalt an Arylcyclohexenverbindungen kleiner als 90 ppm sowie Verfahren zur Herstellung der Polymerdispersionen durch radikalisch initiierte Emulsionspolymerisation aus mindestens drei verschiedenen Monomertypen. Eine monomere vinylaromatische Verbindung, ein monomeres konjugiertes aliphatisches Dien und eine monomere ethylenisch ungesättigte Säure werden in wässrigem Medium in Gegenwart eines Mercaptoalkylcarbonsäureesters einer C2- bis C4-Carbonsäure und ohne Alkylmercaptan als Molekulargewichtsregler copolymerisiert. Die Erfindung betrifft auch die Verwendung der Polymerdispersionen als Bindemittel, Klebstoff, Schlichtemittel für Fasern, zur Herstellung von Überzügen oder zur Herstellung von Papierstreichmassen.

Wässrige Polymerdispersionen aus vinylaromatischer Verbindung, konjugiertem aliphatischen Dien und ethylenisch ungesättigter Säure haben vielfältige Anwendungsgebiete. So sind zum Beispiel Bindemittel für Papierstreichmassen bekannt auf Basis von Copolymeren aus vinylaromatischen Verbindungen wie z.B. Styrol, aliphatischen Dienen wie z.B. 1,3-Butadien und ethylenisch ungesättigter Säure wie z.B. Acrylsäure oder Methacrylsäure. Bei der Herstellung der Polymerisate durch radikalische Polymerisation werden zur Einstellung eines für das jeweilige Anwendungsgebiet geeigneten Molekulargewichts Molekulargewichtsregler bzw. Kettenübertragungsmittel eingesetzt. Zu den effektivsten und häufig verwendeten Molekulargewichtsreglern zählen Alkylmercaptan, d.h. mit einer Thiolgruppe substituierte Alkane wie z.B. tert.-Dodecylmercaptan (TDMC). Diese Stoffe haben den Vorteil, dass sie neben den das Molekulargewicht der Polymere regelnden Eigenschaften zusätzlich zu guten anwendungstechnischen Eigenschaften von Papierstreichmitteln führen. Gewünscht werden insbesondere polymere Bindemittel mit einer hohen Bindekraft und polymere Bindemittel enthaltende Papierstreichmittel mit einer guten Oberflächenfestigkeit, z.B. einer guten Trockenrupffestigkeit und einer guten Nassrupffestigkeit. TDMC erfüllt zwar diese Anforderungen, hat aber den Nachteil eines unangenehmen Geruches. Das kann sich bei der Herstellung sowie auch im Endprodukt als störend erweisen. Alternative Molekulargewichtsregler auf der Basis von Alkylestern von Mercaptoalkylcarbonsäuren sind gegenüber Alkylmercaptanen geruchlich vorteilhafter aber in den anwendungstechnischen Eigenschaften nicht immer in jeder Hinsicht zufriedenstellend.

In der US 5,354,800 wird ein Verfahren zur Herstellung von Copolymerdispersionen beschrieben, welche unter anderem als Bindemittel in Papierstreichmitteln anwendbar sind. Die Herstellung erfolgt durch Polymerisation von konjugiertem Dienmonomer, einem weiteren ethylenisch ungesättigten Monomer sowie einem ethylenisch ungesättigten Carbonsäuremonomer in Gegenwart einer Kombination von einem hydrophilen Kettenübertragungsmittel und einem hydrophoben Kettenübertragungsmittel. Als hydrophobe Kettenübertragungsmittel werden u. a. Alkylmercaptane und Mercaptoalkylester von Alkylcarbonsäuren genannt.

JP2001248098 offenbart wässerige Polymerdispersion, dass durch Emulsionspolymerisation aus 1,3-Butadien, Styrol, und ethylenischen ungesättigten Säure Monomere hergestellt wird und beschreibt, dass solche Polymerdispersion weiniger als 50 ppm 4-Phenylcyclohexen enthalten und sind für die Herstellung von Papierstreichmasse oder Überzügen geeignet.

Bei der Verwendung von Molekulargewichtsreglern auf Basis von Mercaptoalkylestern von Alkylcarbonsäuren bei der Copolymerisation von Vinylaromaten und konjugierten, ethylenisch ungesättigten Dienen kann es zur Bildung von Arylcyclohexenen als unerwünschte Nebenprodukte kommen. So können sich z. B. bei der Copolymerisation von Styrol und 1,3-Butadien erheblich Mengen an unerwünschtem 4-Phenyl-cyclohexen bilden.

Der Erfindung liegt die Aufgabe zugrunde, wässrige Polymerdispersionen auf Basis von Copolymerisaten aus Vinylaromaten und konjugierten aliphatischen Dienen zur Verfügung zu stellen, wobei die Dispersionen im Vergleich zu mit Alkylmercaptanen hergestellten Dispersionen einen möglichst neutralen Geruch, möglichst gute Anwendungseigenschaften als Bindemittel in Papierstreichmitteln sowie einen möglichst geringen Gehalt an Arylcyclohexenen aufweisen sollen.

Die Aufgabe wird erfindungsgemäß gelöst durch eine Arylcyclohexen-freie oder Arylcyclohexen-arme wässrige Polymerdispersion, herstellbar durch radikalisch initiierte Emulsionspolymerisation aus mindestens drei verschiedenen Monomertypen (A) bis (C), wobei
(A) mindestens eine monomere vinylaromatische Verbindung,
(B) mindestens ein monomeres konjugiertes aliphatisches Dien und
(C) mindestens eine monomere ethylenisch ungesättigte Säure
in wässrigem Medium copolymerisiert werden,
wobei die Copolymerisation der Monomeren in Gegenwart mindestens eines Molekulargewichtsreglers erfolgt,
wobei als Molekulargewichtsregler mindestens ein Mercaptoalkylcarbonsäureester einer C2- bis C4-Carbonsäure eingesetzt wird,
wobei als Molekulargewichtsregler kein bzw. im Wesentlichen kein Alkylmercaptan eingesetzt wird und
wobei der Gehalt an Arylcyclohexenverbindungen in der wässrigen Polymerdispersion kleiner als 90 ppm beträgt.

Arylcyclohexene sind organische Verbindungen, welche eine Arylgruppe aufweisen und die Arylgruppe mit mindestens einer Cyclohexengruppe sowie gegebenenfalls mit weiteren Gruppen substituiert ist. Ein Beispiel ist 4-Phenyl-cyclohexen. Arylcyclohexenarm bedeutet, dass die wässrige Polymerdispersion weniger als 90 ppm, insbesondere weniger als 80 ppm an Arylcyclohexen enthält, vorzugweise weniger als 90 ppm 4-Phenyl-cyclohexen, insbesondere weniger als 80 ppm 4-Phenyl-cyclohexen.

### Vorzugweise werden

(A) 19,8 bis 80 Gew.-Teile mindestens einer vinylaromatischen Verbindung,
(B) 19,8 bis 80 Gew.-Teile mindestens eines konjugierten aliphatischen Diens,
(C) 0,1 bis 15 Gew.-Teile mindestens einer ethylenisch ungesättigten Säure und,
(D) 0 bis 20 Gew.-Teile mindestens eines weiteren, von den Monomeren (A) bis (C) verschiedenen monoethylenisch ungesättigten Monomeren,
eingesetzt, wobei die Summe der Gew.-Teile der Monomeren (A) bis (D) 100 beträgt.

Die wässrigen Polymerdispersionen sind beispielsweise dadurch erhältlich, dass man bei der Emulsionscopolymerisation Monomermischungen aus
(A) 19,8 bis 80, vorzugsweise 25 bis 70 Gew.-Teile, Styrol und/oder Methylstyrol,
(B) 19,8 bis 80, vorzugsweise 25 bis 70 Gew.-Teile 1,3-Butadien und/oder Isopren,
(C) 0,1 bis 15 Gew.-Teile mindestens einer ethylenisch ungesättigten Säure, welche ausgewählt ist aus einer oder mehreren Verbindungen der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat, Vinylphosphonsäure und Salzen dieser Säuren und
(D) 0 bis 20 Gew.-Teilen, vorzugsweise 0,1 bis 15 Gew.-Teilen mindestens eines anderen monoethylenisch ungesättigten Monomeren, welches ausgewählt ist aus C1- bis C18-Alkylestern der Acrylsäure und C1- bis C18-Alkylestern der Methacrylsäure,
einsetzt, wobei die Summe der Gew.-Teile der Monomeren (A) bis (D) 100 beträgt.

Als Monomere der Gruppe (A) kommen vinylaromatische Verbindungen in Betracht, z. B. Styrol, α-Methylstyrol und/oder Vinyltoluol. Aus dieser Gruppe von Monomeren wird vorzugsweise Styrol verwendet. 100 Gew.-Teile der bei der Polymerisation insgesamt eingesetzten Monomermischungen enthalten beispielsweise 19,8 bis 80 Gew.-Teile und vorzugsweise 25 bis 70 Gew.-Teile mindestens eines Monomers der Gruppe (A).

Monomere der Gruppe (B) sind beispielsweise Butadien-1,3, Isopren, Pentadien-1,3, Dimethylbutadien-1,3 und Cyclopentadien. Aus dieser Gruppe von Monomeren setzt man vorzugsweise Butadien-1,3 und/oder Isopren ein. 100 Gew.-Teile der Monomermischungen, die bei der Emulsionspolymerisation insgesamt eingesetzt werden, enthalten beispielsweise 19,8 bis 80 Gew.-Teile, vorzugsweise 25 bis 70 Gew.-Teile und insbesondere 25 bis 60 Gew.-Teile mindestens eines Monomers der Gruppe (B).

Monomere der Gruppe (C) sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende α,β-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Besonders bevorzugt sind Acrylsäure und Methacrylsäure, insbesondere Acrylsäure.

Die Säuregruppen enthaltenden Monomeren der Gruppe (C) können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel. 100 Gew.-Teile der Monomermischungen, die bei der Emulsionspolymerisation eingesetzt werden, enthalten beispielsweise 0,1 bis 15 Gew.-Teile, vorzugsweise 0,1 bis 10 Gew.-Teile oder 1 bis 8 Gew.-Teile mindestens eines Monomers der Gruppe (C).

Bevorzugt sind Monomerkombinationen, bei denen die vinylaromatische Verbindung (A) ausgewählt ist aus Styrol, Methylstyrol und deren Gemisch, das konjugierte aliphatische Dien (B) ausgewählt ist aus 1,3-Butadien, Isopren und deren Gemisch und die ethylenisch ungesättigte Säure (C) ausgewählt ist aus einer oder mehrerer Verbindungen der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat, Vinylphosphonsäure und Salzen dieser Säuren.

Als Monomere der Gruppe (D) kommen andere monoethylenisch ungesättigte Verbindungen in Betracht. Beispiele hierfür sind ethylenisch ungesättigte Carbonsäureamide wie insbesondere Acrylamid und Methacrylamid, ethylenisch ungesättigte Carbonsäurenitrile wie insbesondere Acrylnitril und Methacrylnitril, Vinylester von gesättigten C1-bis C18-Carbonsäuren, vorzugsweise Vinylacetat, sowie Ester der Acrylsäure und der Methacrylsäure mit einwertigen C₁- bis C₁₈-Alkoholen wie Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, sec.-Butylacrylat. sec.-Butylmethacrylat, tert.-Butylacrylat, tert.-Butylmethacrylat, Pentylacrylate, Pentylmethacrylate, 2-Ethylhexylacrylat, 2-Ethylhexylmethacrylat, Allylester gesättigter Carbonsäuren, Vinylether, Vinylketone, Dialkylester ethylenisch ungesättigter Carbonsäuren, N-Vinylpyrrolidon, N-Vinylpyrrolidin, N-Vinylformamid, N,N-Dialkylaminoalkylacrylamide, N,N-Dialkylaminoalkylmethacrylamide, N,N-Dialkylaminoalkylacrylate, N,N-Dialkylaminoalkylmethacrylate, Vinylchlorid und Vinylidenchlorid. Diese Gruppe von Monomeren wird gegebenenfalls zur Modifizierung der Polymeren eingesetzt. 100 Gew.-Teile der bei der Emulsionspolymerisation eingesetzten Monomermischungen enthalten beispielsweise 0 bis 20 Gew.-Teile, oder 0,1 bis 15 Gew.-Teile und insbesondere 0,5 bis 10 Gew.-Teile mindestens eines Monomers der Gruppe (D).

In einer Ausführungsform der Erfindung werden solche Monomere der Gruppe (D) eingesetzt, deren Copolymerisation zu einer weiteren Absenkung des Gehaltes an Arylcyclohexen führt. In Betracht kommen insbesondere C₁- bis C₁₈-Alkylester der Acrylsäure und C₁- bis C₁₈-Alkylester der Methacrylsäure in Einsatzmengen von beispielsweise 0,1-15 Gew.-Teilen.

Um die Eigenschaften der Polymeren zu modifizieren, wird die Emulsionspolymerisation in Gegenwart mindestens eines Polymerisationsreglers durchgeführt. Hierbei wird im Wesentlichen kein Alkylmercaptan eingesetzt, d.h. Alkylmercaptane werden überhaupt nicht oder jedenfalls nicht in die geruchlichen Eigenschaften der Polymerdispersion beeinflussenden Mengen verwendet.

Als Molekulargewichtsregler wird mindestens ein Mercaptoalkylcarbonsäureester einer C₂- bis C4-Carbonsäure eingesetzt. Die zugrundeliegenden Carbonsäuren sind Essigsäure, Propansäure, Isobutansäure oder n-Butansäure, vorzugsweise Propansäure. Bei den Mercaptoalkylgruppen kann es sich um lineare, verzweigte oder cyclische Kohlenwasserstoffreste mit mindestens einer SH-Gruppe und beispielsweise bis zu 18 C-Atomen handeln. Bevorzugt sind Verbindungen der Formel

R¹-C(=O)-O-R²-SH

wobei R¹ eine Alkylgruppe mit 1 bis 3 C-Atomen bedeutet und R² eine divalente Alkylengruppe mit 1 bis 18 C-Atomen bedeutet. Besonders bevorzugt wird 2-Mercaptoethyl-propionat als Molekulargewichtsregler eingesetzt.

Beispiele für weitere Polymerisationsregler, die gegebenenfalls mit verwendet werden können, sind organische Verbindungen, die Schwefel in gebundener Form enthalten wie Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff. Weitere Polymerisationsregler sind Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit.

Die Menge an Molekulargewichtsregler beträgt beispielsweise 0,01 bis 5, vorzugsweise 0,1 bis 1 Gew.-%, bezogen auf die bei der Polymerisation eingesetzten Monomeren. Die Regler werden vorzugsweise zusammen mit den Monomeren zudosiert. Sie können jedoch auch teilweise oder vollständig in der Vorlage anwesend sein. Sie können auch stufenweise gegenüber den Monomeren versetzt zudosiert werden.

Bei der Emulsionspolymerisation verwendet man üblicherweise Initiatoren, die unter den Reaktionsbedingungen Radikale bilden. Die Initiatoren werden beispielsweise in Mengen bis zu 2 Gew.-%, vorzugsweise zu mindestens 0,9 Gew.-%, z.B. von 1,0 bis 1,5 Gew.-%, bezogen auf die zu polymerisierenden Monomeren, eingesetzt. Geeignete Polymerisationsinitiatoren sind z.B. Peroxide, Hydroperoxide, Wasserstoffperoxid, Natrium- oder Kaliumpersulfat, Redoxkatalysatoren und Azoverbindungen wie 2,2-Azobis(4-methoxy-2,4-dimethylvaleronitril), 2,2-Azobis(2,4-dimethylvaleronitril) und 2,2-Azobis(2-amidinopropan)dihydrochlorid. Beispiele für weitere geeignete Initiatoren sind Dibenzoylperoxid, tert.-Butylperpivalat, tert.-Butyl-per-2-ethylhexanoat, Di-tert.-butylperoxid, Diamylperoxid, Dioctanoylperoxid, Didecanoylperoxid, Dilauroylperoxid, Bis(o-toluyl)peroxid, Succinylperoxid, tert.-Butalperacetat, tert.-Butylpermaleinat, tert.-Butylperisobutyrat, tert.-Butylperpivalat, tert.-Butylperoctoat, tert.-Butylperbenzoat, tert.-Butylhydroperoxid, Azo-bis-isobutyronitril, 2,2'-Azo-bis-(2-methylbutyronitril), 2,2'-Azobis(2,4-dimethylvaleronitril) und 2,2'-Azobis(N,N'-dimethylenisobutyroamidin)-dihydrochlorid. Bevorzugt sind Initiatoren ausgewählt aus der Gruppe der Peroxodisulfate, Peroxosulfate, Azoinitiatoren, organischen Peroxide, organischen Hydroperoxide und Wasserstoffperoxid. Besonders bevorzugt werden wasserlösliche Initiatoren eingesetzt, z. B. Natriumpersulfat, Kaliumpersulfat, Ammoniumpersulfat, Natriumperoxodisulfat, Kaliumperoxodisulfat und/oder Ammoniumperoxodisulfat. Man kann die Polymerisation auch mit Hilfe energiereicher Strahlen wie Elektronenstrahlen oder durch Bestrahlen mit UV-Licht initiieren.

In einer Ausführungsform der Erfindung werden zur weiteren Reduktion des Gehaltes an Arylcyclohexenen die Initiatoren in Mengen von mindestens 1,2 Gew.-% eingesetzt.

Als besonders günstig zur Vermeidung von hohen Gehalten an Arylcyclohexenen hat es sich erwiesen, dass die Emulsionspolymerisation in mindestens zwei Stufen erfolgt, wobei der Beginn der Zugabe der monomeren vinylaromatischen Verbindung (A) zeitlich versetzt zum Beginn der Zugabe des monomeren konjugierten aliphatischen Diens erfolgt. Vorzugsweise wird zumindest ein Teil der monomeren vinylaromatischen Verbindungen. z.B. mindestens 3,5 Gew.-% der Gesamtmenge aller monomeren vinylaromatischen Verbindungen unter Polymerisationsbedingungen in dem wässrigen Medium vorgelegt oder der Polymerisationsmischung zugegeben, bevor die Zugabe von monomeren konjugierten aliphatischen Dienen gestartet wird.

Gegenstand der Erfindung ist daher auch ein Verfahren zur Herstellung von Arylcyclohexen-freien oder Arylcyclohexen-armen wässrigen Polymerdispersionen aus mindestens drei verschiedenen Monomertypen (A) bis (C), wobei
(A) mindestens eine monomere vinylaromatische Verbindung,
(B) mindestens ein monomeres konjugiertes aliphatisches Dien und
(C) mindestens eine monomere ethylenisch ungesättigte Säure
in wässriger Emulsion copolymerisiert werden,
wobei die Copolymerisation der Monomeren radikalisch initiiert wird und in Gegenwart mindestens eines Molekulargewichtsreglers erfolgt,
wobei als Molekulargewichtsregler mindestens ein Mercaptoalkylcarbonsäureester einer C₂- bis C4-Carbonsäure eingesetzt wird,
wobei als Molekulargewichtsregler kein, bzw. im Wesentlichen kein Alkylmercaptan eingesetzt wird und
wobei die Emulsionspolymerisation in mindestens zwei Stufen erfolgt,
wobei der Beginn der Zugabe der monomeren vinylaromatischen Verbindung (A) zeitlich versetzt zum Beginn der Zugabe des monomeren konjugierten aliphatischen Diens (B) erfolgt.

Vorzugsweise werden mindestens ein Teil der monomeren vinylaromatischen Verbindungen unter Polymerisationsbedingungen in dem wässrigen Medium vorgelegt oder dem Polymerisationsgemisch zugegeben, bevor die Zugabe von monomeren konjugierten aliphatischen Dienen gestartet wird. Das bedeutet erfindungsgemäß, dass zu Beginn der Polymerisationsreaktion im Polymerisationsgemisch jedenfalls keine wesentlichen Mengen an monomeren konjugierten aliphatischen Dienen enthalten sind. Dabei sind wesentliche Mengen solche Mengen, welche bei der Polymerisation zu einer wesentlichen Menge (> 90ppm) an Arylcyclohexen als Nebenprodukte führt. Polymerisationsgemisch ist die Mischung aus vorgelegten oder dem Polymerisationsgefäß zugeführten Monomeren und bereits entstandenem Polymer.

In einer bevorzugten Ausführungsform des erfindungsgemäßen Verfahrens sind mindestens 5 Gew.-%, vorzugsweise 7 bis 30 Gew.% der Gesamtmenge aller monomeren vinylaromatischen Verbindungen in dem Polymerisationsgemisch unter Polymerisationsbedingungen vorhanden und vorzugsweise bereits polymerisiert, bevor die Zugabe von monomeren konjugierten aliphatischen Dienen gestartet wird. Die restlichen Monomeren werden dann unter Polymerisationsbedingungen gemeinsam oder getrennt voneinander zur Vorlage dosiert. Unter Polymerisationsbedingungen soll verstanden werden, dass das Reaktionsgemisch in der Vorlage auf die erforderliche Temperatur erhitzt worden ist, bei der die Polymerisation abläuft. Diese Temperaturen betragen beispielsweise 80 bis 130 °C, vorzugsweise 85 bis 120 °C. Die Polymerisation wird vorzugsweise unter Druck durchgeführt, z.B. bei Drücken bis zu 15 bar, z.B. bei 2 bis 10 bar.

Um die erfindungsgemäßen Polymerdispersionen herzustellen, legt man beispielsweise in einem beheizbaren Reaktor, der mit einer Mischvorrichtung ausgestattet ist, einen Teil der von monomeren konjugierten aliphatischen Dienen verschiedenen Monomere (z.B. 2 bis 10 Gew.-Teile bezogen auf die Gesamtmenge an Monomeren), einen Teil der Initiatoren (z.B. 2 bis 10 Gew.-Teile bezogen auf die Gesamtmenge an Initiatoren), einen Teil der Regler (z.B. 2 bis 10 Gew.-Teile bezogen auf die Gesamtmenge an Reglern) und gegebenenfalls Polymersaat vor, erwärmt auf Polymerisationsbedingungen und lässt die restlichen Monomeren, Initiatoren und Regler gemeinsam oder getrennt zulaufen.

Um die Dispergierung der Monomeren in dem wässrigen Medium zu unterstützen, kann man die üblicherweise als Dispergiermittel eingesetzten Schutzkolloide und/oder Emulgatoren verwenden. Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol, insbesondere von 5000 bis 50000 g/mol.

Geeignete Emulgatoren sind beispielsweise ethoxylierte C₈- bis C₃₆-Fettalkohole mit einem Ethoxylierungsgrad von 3 bis 50, ethoxylierte Mono-, Di- und Tri- C₄- bis C₁₂-Alkylphenole mit einem Ethoxylierungsgrad von 3 bis 50, Alkalimetallsalze von Dialkylestern der Sulfobernsteinsäure, Alkalimetall- und Ammoniumsalze von C₈- bis C₁₂-Alkylsulfaten, Alkalimetall- und Ammoniumsalze von C₁₂- bis C₁₈-Alkylsulfonsäuren und Alkalimetall- und Ammoniumsalze von C₉- bis C₁₈-Alkylarylsulfonsäuren. Kationaktive Emulgatoren sind z.B. Verbindungen mit mindestens einer Amino- oder Ammoniumgruppe und mindestens einer C₈-C₂₂-Alkylgruppe. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren.

Geeignete Schutzkolloide sind beispielsweise abgebaute Stärke, insbesondere Maltodextrin. Als Ausgangstärken zur Herstellung der abgebauten Stärken eignen sich alle nativen Stärken wie Stärken aus Mais, Weizen, Hafer, Gerste, Reis, Hirse, Kartoffeln, Erbsen, Tapioka, Sorghum oder Sago. Von Interesse sind außerdem solche natürlichen Stärken, die einen hohen Amylopektingehalt aufweisen wie Wachsmaisstärke und Wachskartoffelstärke. Der Amylopektingehalt dieser Stärken liegt oberhalb von 90 %, meistens bei 95 bis 100 %. Auch chemisch durch Veretherung oder Veresterung modifizierte Stärken können zur Herstellung der erfindungsgemäßen Polymerdispersionen eingesetzt werden. Solche Produkte sind bekannt und im Handel erhältlich. Sie werden beispielsweise durch Veresterung von nativer Stärke oder abgebauter nativer Stärke mit anorganischen oder organischen Säuren, deren Anhydriden oder Chloriden hergestellt. Von besonderem Interesse sind phosphatierte und acetylierte abgebaute Stärken. Die gängigste Methode zur Veretherung von Stärken besteht in der Behandlung von Stärke mit organischen Halogenverbindungen, Epoxiden oder Sulfaten in wässriger alkalischer Lösung. Bekannte Stärkeether sind Alkylether, Hydroxyalkylether, Carboxyalkylether und Allylether. Außerdem eignen sich die Umsetzungsprodukte von Stärken mit 2,3-Epoxipropyltrimethylammoniumchlorid. Besonders bevorzugt sind abgebaute native Stärken, insbesondere zu Maltodextrin abgebaute native Stärken. Weitere geeignete Stärken sind kationisch modifizierte Stärken, d.h. Stärkeverbindungen, welche Aminogruppen oder Ammoniumgruppen aufweisen. Die abgebauten Stärken haben beispielsweise eine intrinsische Viskosität ηi von weniger als 0,07 dl/g oder weniger als 0,05 dl/g. Die intrinsische Viskosität ηi der abgebauten Stärken liegt vorzugsweise in dem Bereich von 0,02 bis 0,06 dl/g. Die intrinsische Viskosität ηi wird bestimmt gemäß DIN EN1628 bei einer Temperatur von 23 °C.

In einer Ausführungsform der Erfindung erfolgt die Emulsionspolymerisation zur weiteren Reduktion des Arylcyclohexengehaltes in Gegenwart von Saatpartikeln. Die Vorlage enthält dann Polymersaat, insbesondere eine Polystyrolsaat, d.h. eine wässrige Dispersion von feinteiligem Polymer, vorzugsweise Polystyrol, mit einem Teilchendurchmesser von 20 bis 40 nm.

Die Emulsionspolymerisation erfolgt in einem wässrigen Medium. Hierbei kann es sich z. B. um vollständig entsalztes Wasser handeln oder auch um Mischungen aus Wasser und einem damit mischbaren Lösemittel wie Methanol, Ethanol oder Tetrahydrofuran. Sobald die jeweils gewünschte Polymerisationstemperatur erreicht ist oder innerhalb einer Zeitspanne von 1 bis 15 Minuten, vorzugsweise 5 bis 15 Minuten nach dem Erreichen der Polymerisationstemperatur beginnt man mit dem Dosieren der Monomeren. Sie können beispielsweise kontinuierlich innerhalb von beispielsweise 60 Minuten bis zu 10 Stunden, meistens innerhalb von 2 bis 4 Stunden in den Reaktor gepumpt werden.

Zumindest hinsichtlich der monomeren konjugierten aliphatischen Diene in Bezug auf die vinylaromatischen Monomere erfolgt eine stufenweise Zugabe. Dabei wird zumindest ein Teil der vinylaromatischen Monomere vorgelegt oder der Vorlage zudosiert, bevor mit der Zugabe der monomeren konjugierten aliphatischen Diene begonnen wird.

In einer bevorzugten Ausführungsform werden mindestens 5, besonders bevorzugt mindestens 7 oder mindestens 10 Gew.-% bezogen auf die Gesamtmenge aller vinylaromatischen Monomere, an vinylaromatischen Monomeren in dem wässrigen Medium unter Polymerisationsbedingungen vorgelegt und/oder der Polymerisationsmischung unter Polymerisationsbedingungen zugegeben, bevor die Zugabe von monomeren konjugierten aliphatischen Diene gestartet wird. Dabei können beispielsweise mindestens 1, besonders bevorzugt mindestens 3 oder mindestens 5 Gew.-% der Monomere vorgelegt werden, bevor der Zulauf der restlichen Monomere gestartet wird. Das Polymerisationsgemisch besteht bei Beginn der Zugabe von monomeren konjugierten aliphatischen Dienen vorzugsweise zu mindestens 5, vorzugsweise mindestens 7 oder mindestens 10 Gew.-Teilen, aus bereits entstandenem Polymer. Insbesondere sind vorzugsweise mindestens 5, besonders bevorzugt mindestens 7 oder mindestens 10 Gew.-% der von monomeren konjugierten aliphatischen Dienen (B) verschiedenen Monomeren (A), (C) und (D), insbesondere Styrol und ethylenisch ungesättigte Säuremonomere bereits polymerisiert, bevor mit der Zugabe von monomeren konjugierten aliphatischen Dienen begonnen wird.

In den erfindungsgemäß erzeugten Polymerpartikeln befinden sich von konjugierten aliphatischen Dienen, insbesondere von Butadien abgeleitete Einheiten vermutlich überwiegend an der Oberfläche oder in einer äußeren Schicht der Polymerpartikel. Der Kern der Polymerpartikel weist vermutlich eine geringere Konzentration an von konjugierten aliphatischen Dienen abgeleiteten Einheiten auf als die Schale.

Auch eine stufenweise erfolgende Zugabe der übrigen Monomeren ist möglich, insbesondere eine stufenweise Zugabe der Monomeren (D).

In einer bevorzugten Ausführungsform des erfindungsgemäßen Verfahrens legt man 1 bis 10 Gew.-% der insgesamt zu polymerisierenden Monomeren (A), (C) und (D) vor. Hierbei legt man die Monomeren im Reaktor vorzugsweise zusammen mit weiteren Bestandteilen (z.B. Polymersaat, Emulgatoren, Schutzkolloiden, jeweils 1 bis 10 Gew.% der jeweiligen Gesamtmenge an Initiatoren und Molekulargewichtsreglern) vor, erhitzt dann den Reaktorinhalt auf die Polymerisationstemperatur und dosiert dann die restlichen Monomeren wie oben angegeben zu. Bei den vorgelegten Monomeren sind erfindungsgemäß keine konjugierte aliphatische Dienmonomere enthalten. Das bedeutet erfindungsgemäß, dass jedenfalls keine wesentlichen Mengen an konjugierten aliphatischen Dienmonomeren enthalten sind. Dabei sind wesentliche Mengen solche Mengen, welche bei der Polymerisation zu einer wesentlichen Menge an Arylcyclohexenen, insbesondere zu 90 ppm oder mehr an Arylcyclohexenen führen.

Nach Abschluss der Polymerisation kann man gegebenenfalls weiteren Initiator zum Reaktionsgemisch zugeben und eine Nachpolymerisation bei gleicher, niedrigerer oder auch höherer Temperatur wie bei der Hauptpolymerisation durchführen. Um die Polymerisationsreaktion zu vervollständigen reicht es in den meisten Fällen, das Reaktionsgemisch nach Zugabe sämtlicher Monomeren noch beispielsweise 1 bis 3 Stunden bei der Polymerisationstemperatur zu rühren. Der pH-Wert kann bei der Polymerisation beispielsweise 1 bis 5 betragen. Nach der Polymerisation wird der pH-Wert beispielsweise auf einen Wert zwischen 6 und 7 eingestellt. Man erhält Arylcyclohexen-arme wässrige Dispersionen. Die Menge an Arylcyclohexen liegt im ppm-Bereich und beträgt vorzugsweise weniger als 90 ppm, insbesondere weniger als 80 ppm.

Man erhält eine wässrige Polymerdispersion, deren dispergierte Teilchen einen mittleren Teilchendurchmesser von vorzugsweise 80 bis 150 nm aufweisen. Der mittlere Teilchendurchmesser der Polymerteilchen kann durch dynamische Lichtstreuung an einer 0,005 bis 0,01 Gew.-%ige wässrigen Polymerdispersion bei 23 °C mit Hilfe eines Autosizers IIC der Fa. Malvern Instruments, England, ermittelt werden. Die Angaben beziehen sich jeweils auf den mittleren Durchmesser der Kumulantenauswertung (cumulant z-average) der gemessenen Autokorrelationsfunktion gemäß IOS-Norm 13321.

In einer Ausführungsform beträgt der Feststoffgehalt der erfindungsgemäßen wässrigen Polymerdispersion 40 bis 60 Gew.%. Der Feststoffgehalt kann z.B. durch entsprechende Einstellung der bei der Emulsionspolymerisation eingesetzten Wassermenge und/oder der Monomermengen erfolgen.

In einer bevorzugten Ausführungsform wird die wässrige Polymerdispersion durch die oben beschriebene Stufenpolymerisation mit zeitlich versetzter Zugabe der monomeren konjugierten aliphatischen Diene in Gegenwart von Polymersaat und mit einer Initiatormenge von mindestens 1 Gew.% hergestellt.

Die erfindungsgemäßen wässrigen Polymerdispersionen werden als Bindemittel, Klebstoff, Schlichtemittel für Fasern, zur Herstellung von Überzügen oder zur Herstellung von Papierstreichmassen verwendet. Die erfindungsgemäßen wässrigen Polymerdispersionen eignen sich sowohl zum Schlichten von Textilfasern und auch zum Schlichten von Mineralfasern, insbesondere Glasfasern. Aufgrund ihrer guten Klebkraft, insbesondere bei Verwendung von Comonomeren, welche zu einer niedrigen Glasübergangstemperatur des Copolymers (z.B. kleiner 20 °C) führen, kann man sie außerdem als Klebstoff und zur Herstellung von Überzügen verwenden. Bevorzugt werden die erfindungsgemäßen wässrigen Polymerdispersionen als Bindemittel in Papierstreichmassen und als Bindemittel für Fasern, insbesondere für Textilfasern eingesetzt.

Ein Gegenstand der Erfindung ist daher auch eine Papierstreichmasse, enthaltend
(i) anorganische Pigmente und
(ii) eine oben beschriebene, nach dem erfindungsgemäßen Verfahren erhältliche wässrige Polymerdispersion
und gegebenenfalls weitere Zusatzstoffe.

Papierstreichmassen enthalten neben Wasser im allgemeinen Pigmente, Bindemittel und Hilfsmittel zur Einstellung der erforderlichen rheologischen Eigenschaften, z. B. Verdicker. Die Pigmente sind üblicherweise in Wasser dispergiert. Die Papierstreichmasse enthält Pigmente in einer Menge von vorzugsweise mindestens 80 Gew.%, z.B. 80 bis 95 Gew.% oder 80 bis 90 Gew.%, bezogen auf den Gesamtfeststoffgehalt. In betracht kommen insbesondere Weißpigmente. Geeignete Pigmente sind beispielsweise Metallsalzpigmente wie z.B. Calciumsulfat, Calciumaluminatsulfat, Bariumsulfat, Magnesiumcarbonat und Calciumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb^{®} 60, Hydrocarb^{®} 60 oder Hydrocarb^{®} 90 ME. Weitere Geeignete Pigmente sind z.B. Kieselsäuren, Aluminiumoxide, Aluminiumhydrat, Silikate, Titandioxid, Zinkoxid, Kaolin, Tonerde, Talkum oder Siliziumdioxid. Geeignete weitere Pigmente sind z.B. verfügbar als Capim^{®} MP 50 (Clay), Hydragloss^{®} 90 (Clay) oder Talcum C10.

Die Papierstreichmasse enthält mindestens ein Bindemittel. Die erfindungsgemäß hergestellte Polymerdispersion kann in der Papierstreichmasse als alleiniges Bindemittel oder in Kombination mit weiteren Bindemitteln eingesetzt werden. Die wichtigsten Aufgaben von Bindemitteln in Papierstreichmassen sind, die Pigmente an das Papier und die Pigmente untereinander zu verbinden und teilweise Hohlräume zwischen Pigmentpartikeln aufzufüllen. Auf 100 Gew.-Teile Pigmente verwendet man beispielsweise 1 bis 50 Gew.-Teile, vorzugsweise 1 bis 25 Gew.-Teile oder 5 bis 20 Gew.-Teile eines organischen Bindemittels (fest, d.h. ohne Wasser oder sonstige bei 21 °C, 1 bar flüssige Lösemittel).

Als weitere Bindemittel in Betracht kommen Bindemittel auf natürlicher Basis, insbesondere Bindemittel auf Stärkebasis sowie von den erfindungsgemäß hergestellten Polymerisaten verschiedene, synthetische Bindemittel, insbesondere durch Emulsionspolymerisation herstellbare Emulsionspolymerisate. Unter Bindemitteln auf Stärkebasis soll in diesem Zusammenhang jegliche native, modifizierte oder abgebaute Stärke verstanden werden. Native Stärken können aus Amylose, Amylopektin oder deren Gemischen bestehen. Bei modifizierten Stärken kann es sich um oxydierte Stärke, Stärkeester oder Stärkeether handeln. Durch Hydrolyse kann das Molgewicht der Stärke verringert werden (abgebaute Stärke). Als Abbauprodukte kommen Oligosaccharide oder Dextrine in Betracht. Bevorzugte Stärken sind Getreide-, Mais- und Kartoffelstärke. Besonders bevorzugt sind Getreide- und Maisstärke, ganz besonders bevorzugt Getreidestärke.

Die weiteren, von den erfindungsgemäß hergestellten Polymerisaten verschiedenen, synthetischen Bindemittel bestehen vorzugsweise zu mindestens 40 Gew.-%, bevorzugt zu mindestens 60 Gew.-%, besonders bevorzugt zu mindestens 80 Gew.-% aus so genannten Hauptmonomeren. Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren. Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, α- und p-Methylstyrol, α-Butyl-styrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Butadien, Isopren und Chloropren genannt.

Bevorzugte Hauptmonomere sind C₁-C₁₀-Alkyl(meth)acrylate und Mischungen der Alkyl(meth)acrylate mit Vinylaromaten, insbesondere Styrol, oder Kohlenwasserstoffe mit 2 Doppelbindungen, insbesondere Butadien, oder Gemische von derartigen Kohlenwasserstoffen mit Vinylaromaten, insbesondere Styrol. Bei Gemischen von aliphatischen Kohlenwasserstoffen (insbesondere Butadien) mit Vinylaromaten (insbesondere Styrol) kann das Verhältnis z. B. zwischen 10:90 bis 90:10, insbesondere 20:80 bis 80:20 liegen. Besonders bevorzugte Hauptmonomere sind Butadien und die vorstehenden Mischungen von Butadien und Styrol.

Neben den Hauptmonomeren kann das als Bindemittel geeignete Emulsionspolymerisat weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Der Gehalt an ethylenisch ungesättigten Säuren im Emulsionspolymerisat ist im Allgemeinen kleiner 10 Gew.-%, vorzugsweise kleiner 8 Gew.-% und mindestens 0,1 Gew.% oder mindestens 1 Gew.%. Weitere Monomere sind z. B. auch Hydroxylgruppen enthaltende Monomere, insbesondere C1-C10-Hydroxyalkyl(meth)acrylate, oder Amide wie (Meth)acrylamid.

Bei Verwendung von synthetischen Bindemitteln können auch natürliche Bindemittel wie Stärke mit verwendet werden, sind jedoch nicht zwingend erforderlich. Vorzugsweise sind erfindungsgemäß hergestellte Polymerisate als einzige synthetische Bindemittel enthalten.

Erfindungsgemäße Papierstreichmassen können zusätzlich weitere Zusatz- und Hilfsstoffe enthalten, z.B. Füllstoffe, Co-Bindemittel und Verdicker zur weiteren Optimierung von Viskosität und Wasserretention, optische Aufheller, Dispergatoren, Tenside, Gleitmittel (z.B. Calciumstearat und Wachse), Neutralisationsmittel (z.B. NaOH oder Ammoniumhydroxid) zur pH-Werteinstellung, Entschäumer, Entlüftungsmittel, Konservierungsmittel (z.B. Biocide), Verlaufshilfsmittel, Farbstoffe (insbesondere lösliche Farbstoffe) etc. Als Verdicker kommen neben synthetischen Polymerisaten (z.B. vernetztes Polyacrylat), insbesondere Cellulosen, vorzugsweise Carboxymethylcellulose in Betracht. Optische Aufheller sind z.B. Fluoreszenz- oder Phosphoreszensfarbstoffe, insbesondere Stilbene.

Es handelt sich vorzugsweise um eine wässrige Papierstreichmasse; sie enthält Wasser insbesondere bereits durch die Zubereitungsform der Bestandteile (wässrige Polymerdispersionen, wässrige Pigment-Slurries); die gewünschte Viskosität kann durch Zugabe von weiterem Wasser eingestellt werden. Übliche Feststoffgehalte der Papierstreichmassen liegen im Bereich von 30 bis 70 Gew.-%. Der pH Wert der Papierstreichmasse wird vorzugsweise auf Werte von 6 bis 10, insbesondere 7 bis 9,5 eingestellt.

Eine Ausführungsform der Erfindung betrifft eine Papierstreichmasse, wobei die Polymerisate der erfindungsgemäß hergestellten wässrigen Polymerdispersion in einer Menge von 1 bis 50 Gew.-Teilen, bezogen auf die Gesamtmenge an Pigmenten, eingesetzt werden und wobei die Pigmente in einer Menge von 80 bis 95 Gewichtsteilen, bezogen auf den Gesamtfeststoffgehalt, enthalten sind und ausgewählt sind aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und wobei die Papierstreichmasse zusätzlich mindestens einen Hilfsstoff enthält, ausgewählt aus der Gruppe bestehend aus Verdickern, weiteren polymeren Bindemitteln, Co-Bindemitteln, optischen Aufhellern, Füllstoffen, Verlaufshilfsmitteln, Dispergatoren, Tensiden, Gleitmitteln, Neutralisationsmitteln, Entschäumern, Entlüftungsmitteln, Konservierungsmitteln und Farbstoffen.

Gegenstand der Erfindung ist auch mit einer erfindungsgemäßen Papierstreichmasse beschichtetes Papier oder Karton und ein Verfahren zum Streichen von Papier oder Karton, wobei
- eine wässrige Polymerdispersion erfindungsgemäß hergestellt oder zur Verfügung gestellt wird; und
- mit dieser Polymerdispersion, mindestens einem Pigment und optionalen weiteren Hilfsstoffen eine Papierstreichmasse hergestellt wird; und die Papierstreichmasse auf mindestens eine Oberfläche von Papier oder Karton aufgebracht wird.

Die Papierstreichmasse wird vorzugsweise auf unbeschichtete Rohpapiere oder unbeschichteten Karton aufgetragen. Die Menge beträgt im allgemeinen 1 bis 50 g, vorzugsweise 5 bis 30 g (fest, d. h. ohne Wasser oder sonstige bei 21 °C, 1 bar flüssige Lösemittel) pro Quadratmeter. Die Beschichtung kann durch übliche Auftragverfahren erfolgen, z.B. mittels Leimpresse, Filmpresse, Bladecoater, Luftbürste, Rakel, Vorhangstreichverfahren (curtain coating) oder Spray-Coater. Je nach Pigmentsystem können die wässrigen Dispersionen der wasserlöslichen Copolymere in Papierstreichmassen für den Grundstrich und/oder für den Deckstrich verwendet werden.

Bei dem erfindungsgemäßen Herstellungsverfahren wird eine Bildung von Arylcyclohexenen weitgehend unterdrückt. Erfindungsgemäße Papierstreichmassen haben gute anwendungstechnische Eigenschaften. Sie haben ein gutes Laufverhalten in Papierbeschichtungsverfahren und ein hohe Bindekraft. Die beschichteten Papiere und Kartone haben eine gute Oberflächenfestigkeit, insbesondere eine sehr hohe Nass- und Trockenrupffestigkeit. Sie sind in den üblichen Druckverfahren, wie Hochdruck, Tiefdruck, Offsetdruck, Digitaldruck, Inkjet-Druck, Flexodruck, Zeitungsdruck, Buchdruck, Sublimationsdruck, Laserdruck, elektrophotographischer Druck oder einer Kombination dieser Druckverfahren gut bedruckbar.

### Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

Die Feststoffgehalte werden bestimmt, indem eine definierte Menge der jeweiligen wässrigen Copolymerisatdispersion (ca. 5 g) bei 140 °C in einem Trockenschrank bis zur Gewichtskonstanz getrocknet wird. Es werden jeweils zwei separate Messungen durchgeführt und der Mittelwert gebildet.
Die Bestimmung der Glasübergangstemperatur erfolgt gemäß DIN 53765 mittels eines DSC820-Geräts, Serie TA8000 der Fa. Mettler-Toledo Int. Inc.
Die Menge an 4-Phenyl-cyclohexen (4-PCH) wird gaschromatographisch bestimmt.

Die mittleren Teilchendurchmesser der Polymerteilchen werden durch dynamische Lichtstreuung an einer 0,005 bis 0,01 gew.-%igen wässrigen Polymerdispersion bei 23°C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

### Beispiel 1 (Vergleichsbeispiel)

### tert.-Dodecylmercaptan als Molekulargewichtsregler

In einem 6 L Druckreaktor, ausgerüstet mit einem MIG-Rührer und 3 Dosiereinrichtungen, wurden bei Raumtemperatur und unter Stickstoffatmosphäre 700 g entionisiertes Wasser, 82 g Polystyrol-Latex (30nm) und jeweils 5 Gew.-% der Zuläufe 1A und 1 B vorgelegt. Anschließend wurde der Reaktorinhalt unter Rühren (180 Upm) auf 90 °C aufgeheizt, und bei Erreichen von 85 °C wurden 57 g einer 7 Gew.-%igen wässrigen Natriumpersulfatlösung zugegeben. Nach 10 Minuten wurden zeitgleich beginnend die restliche Menge (jeweils 95%) an Zulauf 1A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrigen NaOH-Lösung auf einen pH-Wert von 6,5 ein und entspannte den Druckbehälter auf Atmosphärendruck.

### Zulauf 1A

**homogene Mischung aus**

| | |
|---|---|
| 535 g | entionisiertes Wasser |
| 51 g | einer 15 Gew.-%igen wässrigen Natriumdodecylsulfat-Lösung |
| 95 g | Acrylsäure |

### Zulauf 1 B

**homogene Mischung aus**

| | |
|---|---|
| 1092 g | Styrol |
| 23 g | tertiär-Dodecylmercaptan |
| 900 g | 1,3-Butadien |

### Zulauf 2

| | |
|---|---|
| 450 g | einer 3,5 gew.-%igen wässrigen Natriumpersulfatlösung |

Die erhaltene wässrige Dispersion (D1) wies einen Feststoffgehalt von 52 Gew.-% auf, bezogen auf das Gesamtgewicht der wässrigen Dispersion. Die Glasübergangstemperatur wurde zu -6°C und die Teilchengröße zu 142 nm bestimmt.
4-PCH Gehalt: 50 ppm

### Beispiel 2 (Vergleichsbeispiel)

### Mercaptoethylpropionat als Molekulargewichtsregler, Standardverfahren: sofortige Butadienzugabe

In einem 6 L Druckreaktor, ausgerüstet mit einem MIG-Rührer und 3 Dosiereinrichtungen, wurden bei Raumtemperatur und unter Stickstoffatmosphäre 700 g entionisiertes Wasser, 82 g Polystyrol-Latex (30nm) und jeweils 5 Gew.-% der Zuläufe 1A und 1 B vorgelegt. Anschließend wurde der Reaktorinhalt unter Rühren (180 Upm) auf 90 °C aufgeheizt, und bei Erreichen von 85 °C wurden 57 g einer 7 Gew.-%igen wässrigen Natriumpersulfat-Lösung zugegeben. Nach 10 Minuten wurden zeitgleich beginnend die restliche Menge (jeweils 95%) an Zulauf 1A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 Gew.-%igen wässrigen NaOH-Lösung auf einen pH-Wert von 6,5 ein und entspannte den Druckbehälter auf Atmosphärendruck.

### Zulauf 1A

**homogene Mischung aus**

| | |
|---|---|
| 520 g | entionisiertes Wasser |
| 51 g | einer 15 Gew.-%igen wässrigen Natriumdodecylsulfat-Lösung |
| 95 g | Acrylsäure |

### Zulauf 1 B

**homogene Mischung aus**

| | |
|---|---|
| 1092 g | Styrol |
| 8 g | 2-Mercaptoethyl-propionat |
| 900 g | 1,3-Butadien |

### Zulauf 2

| | |
|---|---|
| 450 g | einer 3,5 Gew.-%igen wässrigen Natriumpersulfatlösung |

Die erhaltene wässrige Dispersion (D2) wies einen Feststoffgehalt von 51,8 Gew.-% auf, bezogen auf das Gesamtgewicht der wässrigen Dispersion. Die Glasübergangstemperatur wurde zu -6 °C und die Teilchengröße zu 141 nm bestimmt. 4-PCH Gehalt: 107 ppm

### Beispiel 3

### Mercaptoethylpropionat als Molekulargewichtsregler, Stufenpolymerisation

In einem 6 L Druckreaktor, ausgerüstet mit einem MIG-Rührer und 3 Dosiereinrichtungen, wurden bei Raumtemperatur und unter Stickstoffatmosphäre 700 g entionisiertes Wasser, 82 g Polystyrol-Latex (30nm) und jeweils 5 Gew.-% der Zuläufe 1A und 1 B vorgelegt. Anschließend wurde der Reaktorinhalt unter Rühren (180 Upm) auf 90 °C aufgeheizt, und bei Erreichen von 85 °C wurden 60 g einer 7 Gew.-%igen wässrigen Natriumpersulfatlösung zugegeben. Nach 10 Minuten wurden zeitgleich beginnend die restliche Menge (jeweils 95%) an Zulauf 1A und Zulauf 1 B innerhalb von 360 Minuten und Zulauf 2 innerhalb von 390 Minuten kontinuierlich mit gleichbleibenden Mengenströmen zudosiert. 30 min nach den Start der Zuläufe 1A und 1 B, wurde mit Zulauf 1C gestartet. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 Gew.-%igen wässrigen NaOH-Lösung auf einen pH-Wert von 6,5 ein und entspannte den Druckbehälter auf Atmosphärendruck.

### Zulauf 1A

**homogene Mischung aus**

| | |
|---|---|
| 537 g | entionisiertes Wasser |
| 51 g | einer 15 Gew.-%igen wässrigen Natriumdodecylsulfat-Lösung |
| 95 g | Acrylsäure |

### Zulauf 1 B

**homogene Mischung aus**

| | |
|---|---|
| 1092 g | Styrol |
| 8 g | 2-Mercaptoethyl-propionat |

### Zulauf 1C

| | |
|---|---|
| 900 g | 1,3-Butadien |

### Zulauf 2

| | |
|---|---|
| 540 g | einer 3,5 Gew.-%igen wässrigen Natriumpersulfatlösung |

Die erhaltene wässrige Dispersion (D3) wies einen Feststoffgehalt von 50,1 Gew.-% auf, bezogen auf das Gesamtgewicht der wässrigen Dispersion. Die Glasübergangstemperatur wurde zu -6 °C und die Teilchengröße zu 142 nm bestimmt. 4-PCH-Gehalt: 63 ppm

### Beispiel 4

### Mercaptoethylpropionat als Molekulargewichtsregler, Stufenpolymerisation

In einem 6 L Druckreaktor, ausgerüstet mit einem MIG-Rührer und 3 Dosiereinrichtungen, wurden bei Raumtemperatur und unter Stickstoffatmosphäre 700 g entionisiertes Wasser, 97 g Polystyrol-Latex (30nm) und jeweils 5 Gew.-% der Zuläufe 1A und 1 B vorgelegt. Anschließend wurde der Reaktorinhalt unter Rühren (180 Upm) auf 90 °C aufgeheizt, und bei Erreichen von 85 °C wurden 60 g einer 7 Gew.-%igen wässrigen Natriumpersulfatlösung zugegeben. Nach 10 Minuten wurden zeitgleich beginnend die restliche Menge (jeweils 95%) an Zulauf 1A und Zulauf 1 B innerhalb von 360 Minuten und Zulauf 2 innerhalb von 390 Minuten kontinuierlich mit gleichbleibenden Mengenströmen zudosiert. 30 min nach den Start der Zuläufe 1A und 1 B, wurde mit Zulauf 1C gestartet. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 Gew.-%igen wässrigen NaOH-Lösung auf einen pH-Wert von 6,5 ein und entspannte den Druckbehälter auf Atmosphärendruck.

### Zulauf 1A

**homogene Mischung aus**

| | |
|---|---|
| 537 g | entionisiertes Wasser |
| 51 g | einer 15 Gew.-%igen wässrigen Natriumdodecylsulfat-Lösung |
| 95 g | Acrylsäure |

### Zulauf 1 B

**homogene Mischung aus**

| | |
|---|---|
| 1092 g | Styrol |
| 8g | 2-Mercaptoethylpropionat |

### Zulauf 1C

| | |
|---|---|
| 900 g | 1,3-Butadien |

### Zulauf 2

| | |
|---|---|
| 540 g | einer 3,5 Gew.-%igen wässrigen Natriumpersulfatlösung |

Die erhaltene wässrige Dispersion (D4) wies einen Feststoffgehalt von 50 Gew.-% auf, bezogen auf das Gesamtgewicht der wässrigen Dispersion. Die Glasübergangstemperatur wurde zu -5 °C und die Teilchengröße zu 138 nm bestimmt.
4-PCH-Gehalt: 49ppm

Die gemäß den Beispielen hergestellten wässrigen Polymerdispersionen D1 bis D4 werden als Bindemittel für Papierstreichmassen verwendet.

### Herstellung der Papierstreichmassen:

Die Zubereitung der Streichfarbe erfolgt in einem Rühraggregat, in das die einzelnen Komponenten nacheinander zugeführt werden. Die Pigmente werden in vordispergierter Form (slurry) zugegeben. Die anderen Komponenten werden nach den Pigmenten zugegeben, wobei die Reihenfolge der Reihenfolge im angegebenen Streichfarbenrezept entspricht. Die Einstellung des Endfeststoffgehalts erfolgt durch die Zugabe von Wasser.

### Streichfarbenrezept:

70 Teile feinteiliges Carbonat (Hydrocarb 90, Omya)
30 Teile feinteiliges Clay (Hydragloss 90, Omya)
10 Teile Streichfarbenbinder (Emulsionspolymerisate der Beispiele 1-4)
0,5 Teile Rheologiehilfsmittel (Carboxymethylcellulose)

Die Streichfarbe wird mittels einer Laborstreichmaschine einseitig auf ein Streichrohpapier aufgetragen und mittels IR-Strahler getrocknet. Das Gewicht der aufgetragenen Strichschicht beträgt ca. 10 g/m2.

Das beschichtete Papier wurde mit dem Fachmann bekannten Prüfverfahren auf die Oberflächenfestigkeit untersucht. Es wurden die folgenden Prüfverfahren angewendet:
IGT Trockenrupffestigkeit
IGT Nassrupffestigkeit
Die Ergebnisse sind in der folgenden Tabelle zusammengefasst.

### Trockenrupffestigkeit mit dem IGT-Probedruckgerät (IGT trocken)

Aus den zu prüfenden Papieren wurden Streifen geschnitten und mit dem IGT-Probedruckgerät bedruckt. Als Druckfarben werden spezielle Prüffarben der Fa. Lorillieux verwendet, die unterschiedliche Zugkräfte übertragen. Die Prüfstreifen werden mit kontinuierlich steigender Geschwindigkeit (maximale Geschwindigkeit 200 cm/s) durch das Druckwerk geführt. Bei der Auswertung wird auf dem Probedruckstreifen der Ort bestimmt, an dem nach Druckbeginn 10 Ausrisse aus der Papieroberfläche (Rupfpunkte) erfolgt sind. Als Maß für die Trockenrupffestigkeit wird die Geschwindigkeit in cm/sec angegeben, die an diesem Ort beim Bedrucken vorlag, sowie die verwendete Prüffarbe. Dabei wird die Qualität einer Papieroberfläche umso besser bewertet, je höher diese Druckgeschwindigkeit am zehnten Rupfpunkt ist.

### Nassrupffestigkeit mit dem IGT-Probedruckgerät (IGT nass)

Aus den zu prüfenden Papieren wurden Streifen geschnitten und mit dem IGT-Probedruckgerät bedruckt. Das Druckgerät wurde so eingerichtet, dass die Prüfstreifen vor dem Druckvorgang mit Wasser befeuchtet werden. Als Druckfarben werden spezielle Prüffarben der Fa. Lorillieux verwendet, die unterschiedliche Zugkräfte übertragen. Der Druck wird mit einer konstanten Geschwindigkeit von 0,6 cm/s durchgeführt. Ausrisse aus der Papieroberfläche sind als unbedruckte Stellen sichtbar. Zur Bestimmung der Nassrupffestigkeit wird mit einem Farbdensitometer die Farbdichte im Vergleich zum vollen Farbton in % bestimmt. Je höher die angegebene Farbdichte, desto besser die Nassrupffestigkeit.

### Geruchstest

Die Produkte wurden darüber hinaus von einer geschulten Gruppe von Personen hinsichtlich des Geruchs beurteilt. Das Vorgehen bei derartigen Geruchsprüfungen ist dem Fachmann bekannt. Das Geruchsniveau der Proben wurde auf einer Skala von 1 bis 6 bewertet, wobei 1 = sehr gut und 6 = sehr schlecht bedeutet.

| | Trockenrupffestigkeit in cm/s | Nassrupffestigkeit in % | Geruch | 4-PCH-Gehalt |
|---|---|---|---|---|
| Beispiel 1 (Vergleich) | 131 | 47 | 4 | 50 |
| Beispiel 2 (Vergleich) | 139 | 54 | 2 | 107 |
| Beispiel 3 | 142 | 61 | 3 | 63 |
| Beispiel 4 | 140 | 69 | 3 | 49 |

Die Beispiele 3 und 4 weisen bei tendenziell besserer Rupffestigkeit und vergleichbarem 4-PCH-Gehalt einen signifikant besseren Geruch auf als das Alkylmercaptan enthaltende Vergleichsbeispiel 1.
Die Beispiele 3 und 4 weisen einen signifikant verringerten 4-PCH-Gehalt auf als das nach Standardverfahren hergestellte Beispiel 2.

## Patentansprüche

1. Arylcyclohexen-freie oder Arylcyclohexen-arme wässrige Polymerdispersion, herstellbar durch radikalisch initiierte Emulsionspolymerisation aus mindestens drei verschiedenen Monomertypen (A) bis (C), wobei
(A) mindestens eine monomere vinylaromatische Verbindung,
(B) mindestens ein monomeres konjugiertes aliphatisches Dien und
(C) mindestens eine monomere ethylenisch ungesättigte Säure
in wässrigem Medium copolymerisiert werden,
wobei die Copolymerisation der Monomeren in Gegenwart mindestens eines Molekulargewichtsreglers erfolgt,
wobei als Molekulargewichtsregler mindestens ein Mercaptoalkylcarbonsäureester einer C₂- bis C4-Carbonsäure eingesetzt wird,
wobei als Molekulargewichtsregler im Wesentlichen kein Alkylmercaptan eingesetzt wird und
wobei der Gehalt an Arylcyclohexenverbindungen in der wässrigen Polymerdispersion kleiner als 90 ppm beträgt.

2. Wässrige Polymerdispersion nach dem vorhergehenden Anspruch, **dadurch gekennzeichnet, dass**
(A) 19,8 bis 80 Gew.-Teile mindestens einer vinylaromatischen Verbindung,
(B) 19,8 bis 80 Gew.-Teile mindestens eines konjugierten aliphatischen Diens,
(C) 0,1 bis 15 Gew.-Teile mindestens einer ethylenisch ungesättigten Säure und
(D) 0 bis 20 Gew.-Teile mindestens eines weiteren, von den Monomeren (A) bis (C) verschiedenen monoethylenisch ungesättigten Monomeren,
eingesetzt werden, wobei die Summe der Gew.-Teile der Monomeren (A) bis (D) 100 beträgt.

3. Wässrige Polymerdispersion nach dem vorhergehenden Anspruch, **dadurch gekennzeichnet, dass** das weitere Monomer (D) in Mengen von 0,1-15 Gew.Teilen eingesetzt wird und ausgewählt ist aus C1- bis C18-Alkylestern der Acrylsäure und C₁- bis C18-Alkylestern der Methacrylsäure.

4. Wässrige Polymerdispersion nach einem der vorhergehenden Ansprüche, **dadurch gekennzeichnet, dass** die vinylaromatische Verbindung (A) ausgewählt ist aus Styrol, Methylstyrol und deren Gemisch, das konjugierte aliphatische Dien (B) ausgewählt ist aus 1,3-Butadien, Isopren und deren Gemisch und die ethylenisch ungesättigte Säure (C) ausgewählt ist aus einer oder mehrerer Verbindungen der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat, Vinylphosphonsäure und Salzen dieser Säuren.

5. Wässrige Polymerdispersion nach einem der vorhergehenden Ansprüche, **dadurch gekennzeichnet, dass** als Molekulargewichtsregler eine Verbindung der Formel
R¹-C(=O)-O-R²-SH
eingesetzt wird, wobei R¹ eine Alkylgruppe mit 1 bis 3 C-Atomen bedeutet und R² eine divalente Alkylengruppe mit 1 bis 18 C-Atomen bedeutet.

6. Wässrige Polymerdispersion nach einem der vorhergehenden Ansprüche, **dadurch gekennzeichnet, dass** als Molekulargewichtsregler 2-Mercaptoethyl-propionat eingesetzt wird.

7. Wässrige Polymerdispersion nach einem der vorhergehenden Ansprüche, **dadurch gekennzeichnet, dass** die Emulsionspolymerisation in mindestens zwei Stufen erfolgt, wobei der Beginn der Zugabe der monomeren vinylaromatischen Verbindung (A) zeitlich versetzt zum Beginn der Zugabe des monomeren konjugierten aliphatischen Diens erfolgt.

8. Wässrige Polymerdispersion nach dem vorhergehenden Anspruch, **dadurch gekennzeichnet, dass** mindestens 5 Gew.-% der Gesamtmenge aller monomeren vinylaromatischen Verbindungen unter Polymerisationsbedingungen in dem wässrigen Medium vorgelegt oder der Polymerisationsmischung zugegeben werden, bevor die Zugabe von monomeren konjugierten aliphatischen Dienen gestartet wird.

9. Wässrige Polymerdispersion nach einem der beiden vorhergehenden Ansprüche, **dadurch gekennzeichnet, dass** die Emulsionspolymerisation in Gegenwart von Saatpartikeln erfolgt.

10. Verfahren zur Herstellung von Arylcyclohexen-freien oder Arylcyclohexen-armen wässrigen Polymerdispersionen aus mindestens drei verschiedenen Monomertypen (A) bis (C), wobei
(A) mindestens eine monomere vinylaromatische Verbindung,
(B) mindestens ein monomeres konjugiertes aliphatisches Dien und
(C) mindestens eine monomere ethylenisch ungesättigte Säure
in wässriger Emulsion copolymerisiert werden,
wobei die Copolymerisation der Monomeren radikalisch initiiert wird und in Gegenwart mindestens eines Molekulargewichtsreglers erfolgt,
wobei als Molekulargewichtsregler mindestens ein Mercaptoalkylcarbonsäureester einer C₂- bis C4-Carbonsäure eingesetzt wird,
wobei als Molekulargewichtsregler kein Alkylmercaptan eingesetzt wird und wobei die Emulsionspolymerisation in mindestens zwei Stufen erfolgt,
wobei der Beginn der Zugabe der monomeren vinylaromatischen Verbindung (A) zeitlich versetzt zum Beginn der Zugabe des monomeren konjugierten aliphatischen Diens (B) erfolgt.

11. Verfahren nach dem vorhergehenden Anspruch, **dadurch gekennzeichnet, dass** mindestens 5 Gew.-% der Gesamtmenge aller monomeren vinylaromatischen Verbindungen (A) unter Polymerisationsbedingungen in dem wässrigen Medium vorgelegt oder der Polymerisationsmischung zugegeben werden, bevor die Zugabe von monomeren konjugierten aliphatischen Dienen (B) gestartet wird.

12. Verfahren nach einem der vorhergehenden Verfahrensansprüche, **dadurch gekennzeichnet, dass** 7 bis 30 Gew.-% der Gesamtmenge aller monomeren vinylaromatischen Verbindungen (A) unter Polymerisationsbedingungen in dem wässrigen Medium vorgelegt oder der Polymerisationsmischung zugegeben werden, bevor die Zugabe von monomeren konjugierten aliphatischen Dienen (B) gestartet wird.

13. Verfahren nach einem der vorhergehenden Verfahrensansprüche, **dadurch gekennzeichnet, dass** die Emulsionspolymerisation in Gegenwart von Saatpartikeln erfolgt.

14. Verfahren nach einem der vorhergehenden Verfahrensansprüche, **dadurch gekennzeichnet, dass**
(A) 19,8 bis 80 Gew.-Teile mindestens einer vinylaromatischen Verbindung, ausgewählt aus der Gruppe bestehend aus Styrol, Methylstyrol und deren Gemisch,
(B) 19,8 bis 80 Gew.-Teile mindestens eines konjugierten aliphatischen Diens, ausgewählt aus der Gruppe bestehend aus 1,3-Butadien, Isopren und deren Gemisch,
(C) 0,1 bis 15 Gew.-Teile mindestens einer ethylenisch ungesättigten Säure, ausgewählt aus der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat, Vinylphosphonsäure und Salzen dieser Säuren und
(D) 0 bis 20 Gew.-Teile mindestens eines weiteren, von den Monomeren (A) bis (C) verschiedenen monoethylenisch ungesättigten Monomeren, ausgewählt aus der Gruppe bestehend aus C₁- bis C₁₈-Alkylestern der Acrylsäure und C₁- bis C₁₈-Alkylestern der Methacrylsäure,
eingesetzt werden, wobei die Summe der Gew.-Teile der Monomeren (A) bis (D) 100 beträgt.

15. Verfahren nach einem der vorhergehenden Verfahrensansprüche, **dadurch gekennzeichnet, dass** als Molekulargewichtsregler eine Verbindung der Formel
R¹-C(=O)-O-R²-SH
eingesetzt wird, wobei R¹ eine Alkylgruppe mit 1 bis 3 C-Atomen bedeutet und R² eine divalente Alkylengruppe mit 1 bis 18 C-Atomen bedeutet.

16. Verwendung des Emulsionspolymerisats der wässrigen Polymerdispersion nach einem der Ansprüche 1 bis 9 als Bindemittel, Klebstoff, Schlichtemittel für Fasern, zur Herstellung von Überzügen oder zur Herstellung von Papierstreichmassen.

17. Papierstreichmasse enthaltend
(i) anorganische Pigmente und
(ii) eine wässrige Polymerdispersion, enthaltend ein Emulsionspolymerisat nach einem der Ansprüche 1 bis 9.

18. Mit einer Papierstreichmasse gemäß dem vorhergehenden Anspruch beschichtetes Papier oder Karton.

## Claims

1. An arylcyclohexene-free or low-arylcyclohexene aqueous polymer dispersion, which can be prepared by free radical emulsion polymerization from at least three different monomer types (A) to (C),
(A) at least one monomeric vinylaromatic compound,
(B) at least one monomeric conjugated aliphatic diene and
(C) at least one monomeric ethylenically unsaturated acid
being copolymerized in an aqueous medium,
the copolymerization of the monomers being effected in the presence of at least one molecular weight regulator,
at least one mercaptoalkylcarboxylic acid ester of a C₂- to C₄-carboxylic acid being used as the molecular weight regulator,
substantially no alkyl mercaptan being used as the molecular weight regulator and
the content of arylcyclohexene compounds in the aqueous polymer dispersion being less than 90 ppm.

2. The aqueous polymer dispersion according to the preceding claim, wherein
(A) from 19.8 to 80 parts by weight of at least one vinylaromatic compound,
(B) from 19.8 to 80 parts by weight of at least one conjugated aliphatic diene,
(C) from 0.1 to 15 parts by weight of at least one ethylenically unsaturated acid and
(D) from 0 to 20 parts by weight of at least one further monoethylenically unsaturated monomer differing from the monomers (A) to (C)
are used, the sum of the parts by weight of the monomers (A) to (D) being 100.

3. The aqueous polymer dispersion according to the preceding claim, wherein the further monomer (D) is used in amounts of 0.1-15 parts by weight and is selected from C₁- to C₁₈-alkyl esters of acrylic acid and C₁- to C₁₈-alkyl esters of methacrylic acid.

4. The aqueous polymer dispersion according to any of the preceding claims, wherein the vinylaromatic compound (A) is selected from styrene, methylstyrene and a mixture thereof, the conjugated aliphatic diene (B) is selected from 1,3-butadiene, isoprene and a mixture thereof and the ethylenically unsaturated acid (C) is selected from one or more compounds of the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate, vinylphosphonic acid and salts of these acids.

5. The aqueous polymer dispersion according to any of the preceding claims, wherein the molecular weight regulator used is a compound of the formula
R¹-C(=O)-O-R²-SH
where R¹ is an alkyl group having 1 to 3 carbon atoms and R² is a divalent alkylene group having 1 to 18 carbon atoms.

6. The aqueous polymer dispersion according to any of the preceding claims, wherein the molecular weight regulator used is 2-mercaptoethyl propionate.

7. The aqueous polymer dispersion according to any of the preceding claims, wherein the emulsion polymerization is effected in at least two stages, the beginning of the addition of the monomeric vinylaromatic compound (A) takes place at a different time from the beginning of the addition of the monomeric conjugated aliphatic diene.

8. The aqueous polymer dispersion according to the preceding claim, wherein at least 5 % by weight of the total amount of all monomeric vinylaromatic compounds are initially taken under polymerization conditions in the aqueous medium or are added to the polymerization mixture before the addition of monomeric conjugated aliphatic dienes is started.

9. The aqueous polymer dispersion according to either of the two preceding claims, wherein the emulsion polymerization is effected in the presence of seed particles.

10. A process for the preparation of arylcyclohexene-free or low-arylcyclohexene aqueous polymer dispersions from at least three different monomer types (A) to (C),
(A) at least one monomeric vinylaromatic compound,
(B) at least one monomeric conjugated aliphatic diene and
(C) at least one monomeric ethylenically unsaturated acid
being copolymerized in aqueous emulsion,
the copolymerization of the monomers being initiated by free radicals and being effected in the presence of at least one molecular weight regulator,
at least one mercaptoalkylcarboxylic acid ester of a C₂- to C₄-carboxylic acid being used as the molecular weight regulator,
no aryl mercaptan being used as the molecular weight regulator and
the emulsion polymerization being effected in at least two stages,
the beginning of the addition of the monomeric vinylaromatic compound (A) taking place at a different time from the beginning of the addition of the monomeric conjugated aliphatic diene (B).

11. The process according to the preceding claim, wherein at least 5% by weight of the total amount of all monomeric vinylaromatic compounds (A) are initially taken under polymerization conditions in the aqueous medium or are added to the polymerization mixture before the addition of monomeric conjugated aliphatic dienes (B) is started.

12. The process according to any of the preceding process claims, wherein from 7 to 30 % by weight of the total amount of all monomeric vinylaromatic compounds (A) are initially taken under polymerization conditions in the aqueous medium or are added to the polymerization mixture before the addition of monomeric conjugated aliphatic dienes (B) is started.

13. The process according to any of the preceding process claims, wherein the emulsion polymerization is effected in the presence of seed particles.

14. The process according to any of the preceding process claims, wherein
(A) from 19.8 to 80 parts by weight of at least one vinylaromatic compound selected from the group consisting of styrene, methylstyrene and a mixture thereof,
(B) from 19.8 to 80 parts by weight of at least one conjugated aliphatic diene selected from the group consisting of 1,3-butadiene, isoprene and a mixture thereof,
(C) from 0.1 to 15 parts by weight of at least one ethylenically unsaturated acid selected from the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate, vinylphosphonic acid and salts of these acids and
(D) from 0 to 20 parts by weight of at least one further monoethylenically unsaturated monomer differing from the monomers (A) to (C) and selected from the group consisting of C₁- to C₁₈-alkyl esters of acrylic acid and C₁- to C₁₈-alkyl esters of methacrylic acid
are used, the sum of the parts by weight of the monomers (A) to (D) being 100.

15. The process according to any of the preceding claims, wherein the molecular weight regulator used is a compound of the formula
R¹-C(=O)-O-R²-SH
where R¹ is an alkyl group having 1 to 3 carbon atoms and R² is a divalent alkylene group having 1 to 18 carbon atoms.

16. The use of the emulsion polymer of the aqueous polymer dispersion according to any of claims 1 to 9 as a binder, adhesive, size for fibers, for the production of coverings or for the preparation of paper coating slips.

17. A paper coating slip comprising
(i) inorganic pigments and
(ii) an aqueous polymer dispersion comprising an emulsion polymer according to any of claims 1 to 9.

18. A paper or cardboard coated with a paper coating slip according to the preceding claim.

## Revendications

1. Dispersion polymère aqueuse exempte d'arylcyclohexène ou pauvre en arylcyclohexène, pouvant être préparée par polymérisation en émulsion initiée par voie radicalaire à partir d'au moins trois types de monomères différents (A) à (C),
(A) au moins un composé aromatique de vinyle monomère,
(B) au moins un diène aliphatique conjugué monomère et
(C) au moins un acide éthyléniquement insaturé monomère étant copolymérisés dans un milieu aqueux,
la copolymérisation des monomères ayant lieu en présence d'au moins un régulateur du poids moléculaire,
au moins un ester d'acide mercaptoalkylcarboxylique d'un acide carboxylique en C₂ à C₄ étant utilisé en tant que régulateur du poids moléculaire,
essentiellement aucun alkylmercaptan n'étant utilisé en tant que régulateur du poids moléculaire et
la teneur en composés d'arylcyclohexène dans la dispersion polymère aqueuse étant inférieure à 90 ppm.

2. Dispersion polymère aqueuse selon la revendication précédente, **caractérisée en ce que**
(A) 19,8 à 80 parties en poids d'au moins un composé aromatique de vinyle,
(B) 19,8 à 80 parties en poids d'au moins un diène aliphatique conjugué,
(C) 0,1 à 15 parties en poids d'au moins un acide éthyléniquement insaturé et
(D) 0 à 20 parties en poids d'au moins un autre monomère monoéthyléniquement insaturé différent des monomères (A) à (C)
sont utilisés, la somme des parties en poids des monomères (A) à (D) étant de 100.

3. Dispersion polymère aqueuse selon la revendication précédente, **caractérisée en ce que** l'autre monomère (D) est utilisé en quantités de 0,1 à 15 parties en poids et est choisi parmi les esters alkyliques en C₁ à C₁₈ de l'acide acrylique et les esters alkyliques en C₁ à C₁₈ de l'acide méthacrylique.

4. Dispersion polymère aqueuse selon l'une quelconque des revendications précédentes, **caractérisée en ce que** le composé aromatique de vinyle (A) est choisi parmi le styrène, le méthylstyrène et leur mélange, le diène aliphatique conjugué (B) est choisi parmi le 1,3-butadiène, l'isoprène et leur mélange, et l'acide éthyléniquement insaturé (C) est choisi parmi un ou plusieurs composés du groupe constitué par l'acide acrylique, l'acide méthacrylique, l'acide itaconique, l'acide maléique, l'acide fumarique, l'acide crotonique, l'acide vinylacétique, l'acide vinylactique, l'acide vinylsulfonique, l'acide styrènesulfonique, l'acide acrylamidométhylpropanesulfonique, l'acrylate de sulfopropyle, le méthacrylate de sulfopropyle, l'acide vinylphosphonique et les sels de ces acides.

5. Dispersion polymère aqueuse selon l'une quelconque des revendications précédentes, **caractérisée en ce qu'**un composé de formule
R¹-C(=O)-O-R²-SH
est utilisé en tant que régulateur du poids moléculaire, R¹ signifiant un groupe alkyle contenant 1 à 3 atomes C et R² signifiant un groupe alkylène bivalent contenant 1 à 18 atomes C.

6. Dispersion polymère aqueuse selon l'une quelconque des revendications précédentes, **caractérisée en ce que** du propionate de 2-mercaptoéthyle est utilisé en tant que régulateur du poids moléculaire.

7. Dispersion polymère aqueuse selon l'une quelconque des revendications précédentes, **caractérisée en ce que** la polymérisation en émulsion a lieu en au moins deux étapes, le début de l'ajout du composé aromatique de vinyle monomère (A) ayant lieu en décalé dans le temps par rapport au début de l'ajout du diène aliphatique conjugué monomère.

8. Dispersion polymère aqueuse selon la revendication précédente, **caractérisée en ce qu'**au moins 5 % en poids de la quantité totale de tous les composés aromatiques de vinyle monomères sont chargés initialement dans le milieu aqueux ou ajoutés au mélange de polymérisation dans les conditions de polymérisation avant le début de l'ajout des diènes aliphatiques conjugués monomères.

9. Dispersion polymère aqueuse selon l'une quelconque des deux revendications précédentes, **caractérisée en ce que** la polymérisation en émulsion a lieu en présence de particules germes.

10. Procédé de préparation de dispersions polymères aqueuses exemptes d'arylcyclohexène ou pauvres en arylcyclohexène à partir d'au moins trois types de monomères différents (A) à (C),
(A) au moins un composé aromatique de vinyle monomère,
(B) au moins un diène aliphatique conjugué monomère et
(C) au moins un acide éthyléniquement insaturé monomère étant copolymérisés dans une émulsion aqueuse,
la copolymérisation des monomères étant initiée par voie radicalaire et ayant lieu en présence d'au moins un régulateur du poids moléculaire,
au moins un ester d'acide mercaptoalkylcarboxylique d'un acide carboxylique en C₂ à C₄ étant utilisé en tant que régulateur du poids moléculaire,
aucun alkylmercaptan n'étant utilisé en tant que régulateur du poids moléculaire et
la polymérisation en émulsion ayant lieu en au moins deux étapes,
le début de l'ajout du composé aromatique de vinyle monomère (A) ayant lieu en décalé dans le temps par rapport au début de l'ajout du diène aliphatique conjugué monomère (B).

11. Procédé selon la revendication précédente, **caractérisé en ce qu'**au moins 5 % en poids de la quantité totale de tous les composés aromatiques de vinyle monomères (A) sont chargés initialement dans le milieu aqueux ou ajoutés au mélange de polymérisation dans les conditions de polymérisation avant le début de l'ajout des diènes aliphatiques conjugués monomères (B).

12. Procédé selon l'une quelconque des revendications de procédé précédentes, **caractérisé en ce que** 7 à 30 % en poids de la quantité totale de tous les composés aromatiques de vinyle monomères (A) sont chargés initialement dans le milieu aqueux ou ajoutés au mélange de polymérisation dans les conditions de polymérisation avant le début de l'ajout des diènes aliphatiques conjugués monomères (B).

13. Procédé selon l'une quelconque des revendications de procédé précédentes, **caractérisé en ce que** la polymérisation en émulsion a lieu en présence de particules germes.

14. Procédé selon l'une quelconque des revendications de procédé précédentes, **caractérisé en ce que**
(A) 19,8 à 80 parties en poids d'au moins un composé aromatique de vinyle choisi dans le groupe constitué par le styrène, le méthylstyrène et leur mélange,
(B) 19,8 à 80 parties en poids d'au moins un diène aliphatique conjugué choisi dans le groupe constitué par le 1,3-butadiène, l'isoprène et leur mélange,
(C) 0,1 à 15 parties en poids d'au moins un acide éthyléniquement insaturé choisi dans le groupe constitué par l'acide acrylique, l'acide méthacrylique, l'acide itaconique, l'acide maléique, l'acide fumarique, l'acide crotonique, l'acide vinylacétique, l'acide vinylactique, l'acide vinylsulfonique, l'acide styrènesulfonique, l'acide acrylamidométhylpropanesulfonique, l'acrylate de sulfopropyle, le méthacrylate de sulfopropyle, l'acide vinylphosphonique et les sels de ces acides, et
(D) 0 à 20 parties en poids d'au moins un autre monomère monoéthyléniquement insaturé différent des monomères (A) à (C) choisi dans le groupe constitué par les esters alkyliques en C₁ à C₁₈ de l'acide acrylique et les esters alkyliques en C₁ à C₁₈ de l'acide méthacrylique
sont utilisés, la somme des parties en poids des monomères (A) à (D) étant de 100.

15. Procédé selon l'une quelconque des revendications de procédé précédentes, **caractérisé en ce qu'**un composé de formule
R¹-C(=O)-O-R²-SH
est utilisé en tant que régulateur du poids moléculaire, R¹ signifiant un groupe alkyle contenant 1 à 3 atomes C et R² signifiant un groupe alkylène bivalent contenant 1 à 18 atomes C.

16. Utilisation du polymère en émulsion de la dispersion polymère aqueuse selon l'une quelconque des revendications 1 à 9 en tant que liant, adhésif, agent d'encollage pour fibres, pour la fabrication de revêtements ou pour la fabrication de sauces de couchage pour papier.

17. Sauce de couchage pour papier, contenant
(i) des pigments inorganiques et
(ii) une dispersion polymère aqueuse contenant un polymère en émulsion selon l'une quelconque des revendications 1 à 9.

18. Papier ou carton revêtu avec une sauce de couchage pour papier selon la revendication précédente.
